# DEMANDE DE BREVET EUROPEEN

(11) **EP 3 838 675 A1**
(43) Date de publication de la demande: **23.06.2021**
(21) Numéro de dépôt: 20214004.2
(22) Date de dépôt: 15.12.2020
(51) Int. Cl.: B60R 5/04

(54) **SYSTÈME DE RECOUVREMENT D'UN COMPARTIMENT À BAGAGES DE VÉHICULE AUTOMOBILE**

(30) Priorité: 16.12.2019 FR 1914503
(71) Demandeur: TREVES PRODUCTS, SERVICES & INNOVATION, 75008 Paris (FR)
(72) Inventeur: GUENAMANT, Nicolas, 08310 Machault (FR); LECOMTE, Alicia, 51220 Villers-Franqueux (FR)
(74) Mandataire: Sayettat, Julien Christian

(57) **Abrégé**

L'invention concerne un système (1) de recouvrement d'un compartiment à bagages de véhicule automobile, ledit système comprenant un deuxième volet (6) mobile entre une position de recouvrement dudit compartiment où il est disposé en arrière du premier volet (4) et une position d'accès audit compartiment où ledit deuxième volet est déplacé de manière à libérer un accès audit compartiment, ledit système comprenant en outre un troisième volet (8) monté en rotation par son bord avant et selon un axe transversal (9) au bord arrière dudit deuxième volet, de sorte que ledit troisième volet soit actionnable entre une position de recouvrement, où il s'inscrit dans le prolongement dudit deuxième volet, et une position d'accès, où il est rabattu après une rotation de sensiblement un demi-tour sur ledit deuxième volet.

## Description

L'invention concerne un système de recouvrement d'un compartiment à bagages de véhicule automobile.

Il est connu, notamment du document WO-2018/162844, de réaliser un système de recouvrement d'un compartiment à bagages de véhicule automobile, ledit système comprenant :
- deux supports latéraux, lesdits supports étant chacun pourvu d'un rail de guidage,
- un premier volet fixe de recouvrement de la partie avant dudit compartiment, ledit volet comprenant une première face supérieure sensiblement plane et horizontale,
- un deuxième volet monté coulissant sur lesdits rails de manière à être mobile relativement auxdits supports, ledit deuxième volet comprenant une deuxième face supérieure sensiblement plane, ledit deuxième volet étant mobile entre :
   ∘ une position de recouvrement dudit compartiment où il est disposé en arrière dudit premier volet, lesdites faces s'inscrivant sensiblement dans un même plan,
   ∘ et une position d'accès audit compartiment où ledit deuxième volet est déplacé de manière à libérer un accès audit compartiment,
sachant que lesdits rails sont agencés de sorte que :
- ladite deuxième face conserve sensiblement son assiette lors du passage d'une position à l'autre,
- ledit deuxième volet en position d'accès est rehaussé et avancé de manière à venir en recouvrement dudit premier volet.

Cependant, avec un tel agencement, la mise en place du deuxième volet en position d'accès dégage une ouverture d'accès dont la surface ne peut généralement excéder la moitié de la surface de couverture réalisée par les deux volets quand ledit deuxième volet est en position de recouvrement.

Et il peut être souhaité que cette ouverture d'accès présente une surface plus importante, afin de faciliter l'accès au compartiment à bagages.

L'invention a pour but de proposer un agencement permettant d'y parvenir.

A cet effet, l'invention propose un système de recouvrement d'un compartiment à bagages de véhicule automobile, ledit système comprenant :
- deux supports latéraux, lesdits supports étant chacun pourvu d'un rail de guidage,
- un premier volet fixe de recouvrement de la partie avant dudit compartiment, ledit volet comprenant une première face supérieure sensiblement plane et horizontale,
- un deuxième volet monté coulissant sur lesdits rails de manière à être mobile relativement auxdits supports, ledit deuxième volet comprenant une deuxième face supérieure sensiblement plane, ledit deuxième volet étant mobile entre :
   ∘ une position de recouvrement dudit compartiment où il est disposé en arrière dudit premier volet, lesdites faces s'inscrivant sensiblement dans un même plan,
   ∘ et une position d'accès audit compartiment où ledit deuxième volet est déplacé de manière à libérer un accès audit compartiment,
sachant que lesdits rails sont agencés de sorte que :
- ladite deuxième face conserve sensiblement son assiette lors du passage d'une position à l'autre,
- ledit deuxième volet en position d'accès est rehaussé et avancé de manière à venir en recouvrement dudit premier volet,
ledit système comprenant en outre un troisième volet monté en rotation par son bord avant et selon un axe transversal au bord arrière dudit deuxième volet, de sorte que ledit troisième volet soit actionnable entre :
- une position de recouvrement, où il s'inscrit dans le prolongement dudit deuxième volet,
- et une position d'accès, où il est rabattu après une rotation de sensiblement un demi-tour sur ledit deuxième volet.

Lorsqu'il est dit que la deuxième face conserve sensiblement son assiette lors du passage d'une position à l'autre, il convient de comprendre que les première et deuxième faces conservent sensiblement leur parallélisme pendant la manipulation du deuxième volet de l'une à l'autre de ses positions.

Dans cette description, les termes de positionnement dans l'espace (longitudinal, transversal, latéral, avant, arrière, horizontal, vertical, supérieur,...) sont pris en référence au système en place dans le véhicule, les deuxième et troisième volets étant en position de recouvrement.

Avec un tel agencement, la présence du troisième volet permet de réduire la dimension longitudinale du premier et du deuxième volet.

Il en résulte que la surface de l'ouverture d'accès est augmentée une fois les deuxième et troisième volets mis en position d'accès.

D'autres particularités et avantages de l'invention apparaîtront dans la description qui suit, faite en référence aux figures jointes, dans lesquelles :
[Fig.1a],

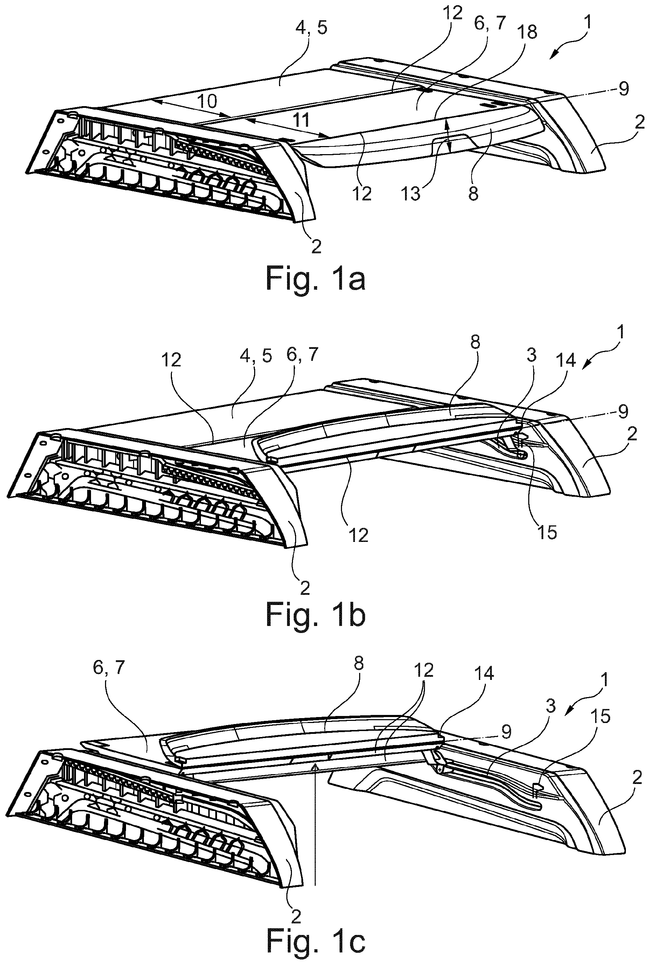

[Fig.1b] et
[Fig.1c] sont des représentations schématiques en perspective d'un système selon une réalisation, les deuxième et troisième volets étant en position de recouvrement (figure 1a), le deuxième volet étant en position de recouvrement et le troisième volet étant en position d'accès (figure 1b) et les deuxième et troisième volets étant en position d'accès (figure 1c),
[Fig.2a],

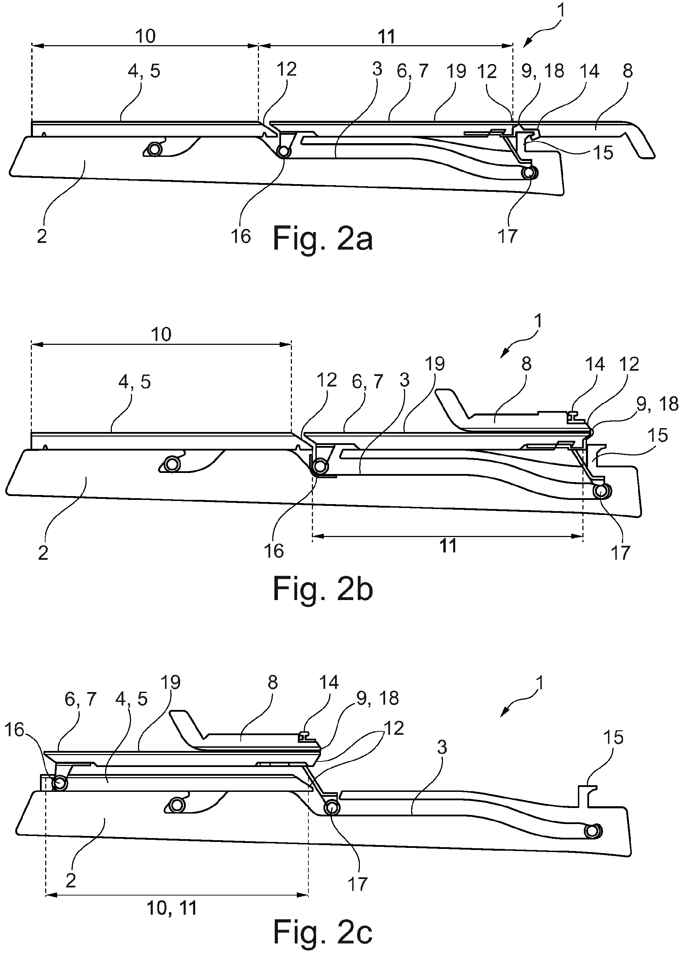

[Fig.2b] et
[Fig.2c] sont des représentations schématiques en coupe verticale longitudinale du système des figures 1, les deuxième et troisième volets étant en position de recouvrement (figure 2a), le deuxième volet étant en position de recouvrement et le troisième volet étant en position d'accès (figure 2b) et les deuxième et troisième volets étant en position d'accès (figure 2c).

En référence aux figures, on décrit un système 1 de recouvrement d'un compartiment à bagages de véhicule automobile, ledit système comprenant :
- deux supports 2 latéraux, lesdits supports étant chacun pourvu d'un rail 3 de guidage,
- un premier volet 4 fixe de recouvrement de la partie avant dudit compartiment, ledit volet comprenant une première face supérieure 5 sensiblement plane et horizontale,
- un deuxième volet 6 monté coulissant sur lesdits rails de manière à être mobile relativement auxdits supports, ledit deuxième volet comprenant une deuxième face supérieure 7 sensiblement plane, ledit deuxième volet étant mobile entre :
   ∘ une position de recouvrement dudit compartiment où il est disposé en arrière dudit premier volet, lesdites faces s'inscrivant sensiblement dans un même plan,
   ∘ et une position d'accès audit compartiment où ledit deuxième volet est déplacé de manière à libérer un accès audit compartiment,
sachant que lesdits rails sont agencés de sorte que :
- ladite deuxième face conserve sensiblement son assiette lors du passage d'une position à l'autre,
- ledit deuxième volet en position d'accès est rehaussé et avancé de manière à venir en recouvrement dudit premier volet,

ledit système comprenant en outre un troisième volet 8 monté en rotation par son bord avant et selon un axe transversal 9 au bord arrière dudit deuxième volet, de sorte que ledit troisième volet soit actionnable entre :
- une position de recouvrement, où il s'inscrit dans le prolongement dudit deuxième volet,
- et une position d'accès, où il est rabattu après une rotation de sensiblement un demi-tour sur ledit deuxième volet.

Selon la réalisation représentée, le troisième volet 8 est monté en rotation au moyen d'une charnière souple 18 issue d'une couche de revêtement 19 s'étendant à la fois sur les deuxième 6 et troisième 8 volets.

Selon la réalisation représentée :
- les premier 4 et deuxième 6 volet présentent en vue de haut une forme sensiblement rectangulaire,
- la largeur 10 - c'est à dire la dimension longitudinale - dudit premier volet correspond sensiblement à celle 11 dudit deuxième volet,
- les bords arrière 12 desdits volets se mettent sensiblement à l'aplomb l'un et l'autre lors de la mise dudit deuxième volet en position d'accès.

Selon la réalisation représentée, le troisième volet 8 présente une dimension longitudinale maximale 13 inférieure - ou égale en variante non représentée - à celle 11 du deuxième volet 6.

Selon la réalisation représentée, le troisième volet 8 est pourvu d'au moins un moyen de blocage 14, au moins un support 2 étant pourvu d'un moyen réciproque 15 coopérant avec ledit moyen quand ledit volet est mis en position de recouvrement, de manière à minimiser les bruits de vibration en situation de roulage du véhicule.

Selon la réalisation représentée, le moyen de blocage 14 est sous forme de crochet venant en prise avec le moyen réciproque 15 en fin de rotation du troisième volet 8 vers sa position de recouvrement.

Selon la réalisation représentée, le deuxième volet 6 est pourvu sur chacun de ses bords latéraux d'un moyen de soutien avant 16 - ici sous forme de doigt - saillant latéralement de l'extrémité avant dudit bord et d'un moyen de soutien arrière 17 - ici sous forme de doigt - saillant latéralement de l'extrémité arrière dudit bord, lesdits moyens coulissant chacun sur le rail 3 correspondant.

Selon une réalisation non représentée, au moins un moyen de soutien 16,17 s'emboite sur un chariot monté coulissant sur le rail 3 correspondant, ledit chariot étant actionnable par un moteur monté sur le support 2 correspondant de manière à permettre un déplacement motorisé du deuxième volet 6.

De façon non représentée, on peut prévoir également que le troisième volet 8 soit actionné par un moteur pour passer d'une position à l'autre.

## Revendications

1. Système (1) de recouvrement d'un compartiment à bagages de véhicule automobile, ledit système comprenant :
• deux supports (2) latéraux, lesdits supports étant chacun pourvu d'un rail (3) de guidage,
• un premier volet (4) fixe de recouvrement de la partie avant dudit compartiment, ledit volet comprenant une première face supérieure (5) sensiblement plane et horizontale,
• un deuxième volet (6) monté coulissant sur lesdits rails de manière à être mobile relativement auxdits supports, ledit deuxième volet comprenant une deuxième face supérieure (7) sensiblement plane, ledit deuxième volet étant mobile entre :
∘ une position de recouvrement dudit compartiment où il est disposé en arrière dudit premier volet, lesdites faces s'inscrivant sensiblement dans un même plan,
∘ et une position d'accès audit compartiment où ledit deuxième volet est déplacé de manière à libérer un accès audit compartiment,
sachant que lesdits rails sont agencés de sorte que :
• ladite deuxième face conserve sensiblement son assiette lors du passage d'une position à l'autre,
• ledit deuxième volet en position d'accès est rehaussé et avancé de manière à venir en recouvrement dudit premier volet,
ledit système étant **caractérisé en ce qu'**il comprend en outre un troisième volet (8) monté en rotation par son bord avant et selon un axe transversal (9) au bord arrière dudit deuxième volet, de sorte que ledit troisième volet soit actionnable entre :
• une position de recouvrement, où il s'inscrit dans le prolongement dudit deuxième volet,
• et une position d'accès, où il est rabattu après une rotation de sensiblement un demi-tour sur ledit deuxième volet.

2. Système selon la revendication 1, **caractérisé en ce que** :
• les premier (4) et deuxième (6) volet présentent en vue de haut une forme sensiblement rectangulaire,
• la largeur (10) dudit premier volet correspond sensiblement à celle (11) dudit deuxième volet,
• les bords arrière (12) desdits volets se mettent sensiblement à l'aplomb l'un et l'autre lors de la mise dudit deuxième volet en position d'accès.

3. Système selon l'une des revendications précédentes, **caractérisé en ce que** le troisième volet (8) présente une dimension longitudinale maximale (13) inférieure ou égale à celle (11) du deuxième volet (6).

4. Système selon l'une quelconque des revendications précédentes, **caractérisé en ce que** le troisième volet (8) est pourvu d'au moins un moyen de blocage (14), au moins un support (2) étant pourvu d'un moyen réciproque (15) coopérant avec ledit moyen quand ledit volet est mis en position de recouvrement, de manière à minimiser les bruits de vibration en situation de roulage du véhicule.

5. Système selon l'une quelconque des revendications précédentes, **caractérisé en ce que** le deuxième volet (6) est pourvu sur chacun de ses bords latéraux d'un moyen de soutien avant (16) saillant latéralement de l'extrémité avant dudit bord et d'un moyen de soutien arrière (17) saillant latéralement de l'extrémité arrière dudit bord, lesdits moyens coulissant chacun sur le rail (3) correspondant.

6. Système selon la revendication 5, **caractérisé en ce qu'**au moins un moyen de soutien (16,17) s'emboite sur un chariot monté coulissant sur le rail (3) correspondant, ledit chariot étant actionnable par un moteur monté sur le support (2) correspondant de manière à permettre un déplacement motorisé du deuxième volet (6).
